# EUROPÄISCHE PATENTSCHRIFT

(11) **EP 3 027 299 B1**
(45) Veröffentlichungstag und Bekanntmachung des Hinweises auf die Patenterteilung: **08.04.2020**
(21) Anmeldenummer: 14741274.6
(22) Anmeldetag: 17.07.2014
(51) Int. Cl.: B01D 69/08, B01D 71/02, B01D 67/00, B01D 53/22, B01D 61/14

(54) **KERAMISCHE HOHLFASERMEMBRANEN MIT VERBESSERTEN MECHANISCHEN EIGENSCHAFTEN**
CERAMIC HOLLOW FIBRE MEMBRANES WITH IMPROVED MECHANICAL PROPERTIES
MEMBRANES DE CÉRAMIQUE À FIBRES CREUSES PRÉSENTANT DES PROPRIÉTÉS MÉCANIQUES AMÉLIORÉES

(30) Priorität: 31.07.2013 DE 102013012671
(43) Veröffentlichungstag der Anmeldung: 08.06.2016
(73) Patentinhaber: MANN + HUMMEL GMBH, 71636 Ludwigsburg (DE)
(72) Erfinder: EHLEN, Frank, 66540 Neunkirchen (DE); WÖRZ, Tobias, 71397 Leutenbach (DE)
(86) Internationale Anmeldenummer: PCT/EP2014/065323
(87) Internationale Veröffentlichungsnummer: WO 2015/014624

(56) Entgegenhaltungen:
- WO-A1-2008/016292
- CN-A- 102 515 817
- MOHSEN ABBASI ET AL: "Performance study of mullite and mullite-alumina ceramic MF membranes for oily wastewaters treatment", DESALINATION, Bd. 259, Nr. 1-3, 1. September 2010 (2010-09-01), Seiten 169-178, XP055139843, ISSN: 0011-9164, DOI: 10.1016/j.desal.2010.04.013
- KAZEMIMOGHADAM M ET AL: "Mechanisms and experimental results of aqueous mixtures pervaporation using nanopore HS zeolite membranes", DESALINATION, ELSEVIER, AMSTERDAM, NL, Bd. 262, Nr. 1-3, 15. November 2010 (2010-11-15), Seiten 273-279, XP027260878, ISSN: 0011-9164 [gefunden am 2010-07-02]

## Beschreibung

### Technisches Gebiet

Die vorliegende Erfindung betrifft allgemein keramische Hohlfasermembranen. Insbesondere betrifft die Erfindung solche Hohlfasermembranen, die verbesserte mechanische Eigenschaften aufweisen. Die Erfindung betrifft weiterhin ein Verfahren zur Herstellung solcher Hohlfasermembranen.

### Stand der Technik

Filter- bzw. Trennverfahren sind von großer wirtschaftlicher Bedeutung für die Konzentration und Trennung von Gasen und Flüssigkeiten. Die Membrantechnologie wird auf diesem Gebiet in ständig zunehmendem Maße verwendet. Dabei bringt die Verwendung von Hohlfasermembranen in einem Filter- oder Konzentrationsprozess eine Reihe von Vorteilen mit sich.

Da das Verhältnis von Oberfläche zu Volumen relativ hoch ist, wird die Effizienz des Konzentrations- bzw. Filterprozesses ebenfalls hoch sein; das Verfahren ist außerdem leicht durchzuführen und an die jeweiligen Bedürfnisse anzupassen.

Frühere handelsübliche Hohlfasermembranen bestanden aus Polymermaterial und waren demzufolge empfindlich gegen korrosive Bedingungen und höhere Temperaturen. Daher wurden bald keramische Hohlfasermembranen hergestellt, beispielsweise durch Kondensieren von Dampf auf einem Karbondraht und anschließendes Entfernen des Drahtes.

Die heute bekannten Verfahren zur Herstellung von keramischen Hohlfasern umfassen einen Spinnprozess, bei dem in einem ersten Schritt elastische Grünfasern aus einer verspinnbaren Masse, die Vorläufer des keramischen Materials enthält, und Polymer hergestellt werden. Der Polymeranteil wird anschließend bei hohen Temperaturen verbrannt und es entstehen rein keramische Hohlfasern.

Aufgrund der Gefügeeigenschaften und ihrer Geometrie erreichen keramische Hohlfasermembranen auf der Basis von Metalloxiden, wie beispielsweise Al₂O₃, nur geringe Festigkeitswerte. So liegt z.B. die Bruchkraft im 3-Punkt-Biegeversuch nur bei etwa 6 N, was umgerechnet einer Biegebruchfestigkeit von etwa 33 MPa entspricht.

Hohe mechanische Beanspruchungen der Hohlfasermembranen treten vor allem bei der Handhabung und in der Weiterverabeitung (z.B. im Modulbau) sowie beim Transport der Hohlfasern (als Einzelelemente oder in Form eines Moduls) und im Betrieb bei Druckstößen oder Druckgradienten auf, so dass dabei teilweise hohe Ausschussraten zu verzeichnen sind. Insbesondere aufwändig ist die Beseitigung von Defekten, z.B. von Faserbrüchen durch Transport, wenn die Hohlfasern bereits in einem Modul verbaut sind.

Diesbezüglich offenbart die DE 10 2009 038 814 A1 ein Modulelement, umfassend einen Hochtemperatur-stabilen Grundkörper mit mindestens einer durchgehenden Öffnung zur Einbringung einer keramischen Kapillarmembran und die EP 0 941 759 A1 beschreibt ein Verfahren zur Herstellung eines Hohlfasermembranmoduls.

Aus der CN 102515817 A ist es bekannt, keramische Hohlfasermembranen mit einer hohen Filterdurchflussmenge herzustellen. Die Zusammensetzung dieser Fasern betragen dabei (in Gew,-%) 40-80 Teile pulverförmiges Aluminiumsilicathydrat, 10-20 Teile pulverförmiger weicher feuerfester Ton, 1-10 Teile pulverförmiger Albit, 1-10 Teile pulverförmiger Dolomit, 6-10 Teile pulverförmiges Borsilikatglaspulver, 1-7 Teile Carboxymethylcellulose und 1-3 Teile Glycerin. Der Außendurchmesser dieser Fasern beträgt 3-6 mm, der Innendurchmesser beträgt 1-2 mm, und die Länge der Fasern 100-1000 mm. Die Gesamtporosität beträgt 50-56%, die Wasserdurchflussmenge 10.000-12.500 L/m²hMPa und die Biegebruchfestigkeit liegt bei 35-85 MPa.

Gattungsgemäße keramische Membranen und Herstellungsverfahren sind aus MOHSEN ABBASI ET AL. "Performance study of mullite and mullite-alumina ceramic MF membranes for oily wasterwaters treatment", DESALINATION Bd. 259, Nr. 1-3, 1. September 2010, Seiten 169 - 178; KAZEM IMOGHADAM M ET AL., "Mechanisms and experimental results of aqueous mixtures pervaporation using nanopore HS zeolite membranes", DESALINATION, Bd. 262, Nr. 1-3, 15. November 2010, Seiten 273-279; und WO 2008/016292 A1 bekannt.

### Offenbarung der Erfindung

Es ist daher die Aufgabe der vorliegenden Erfindung, keramische Hohlfasermembranen mit verbesserten mechanischen Eigenschaften unter Beibehaltung von Porosität und Fluxleistung bisheriger Hohlfasermembranen bereitzustellen.

Diese und weitere Aufgaben werden durch das Verfahren nach Anspruch 1 und die Hohlfasermembran nach Anspruch 2 gelöst.

Die erfindungsgemäßen Hohlfasermembranen sind vor allem zur Mikrofiltration, Ultrafiltration, Nanofiltration und Gastrennung geeignet, insbesondere für den Bereich der Wasserreinigung (Abwasserreinigung, Trinkwasseraufbereitung, etc.) oder der Öl-Wasser-Trennung, wie sie in der Öl- und Gasindustrie Verwendung findet.

### Ausführungsform(en) der Erfindung

Hohlfasermembranen werden durch einen Spinnprozess unter Verwendung einer Spinnmasse hergestellt, wobei die Spinnmasse als Basisformulierung aus Lösungsmittel, Polymer und keramischem Pulver (Aluminiumoxid) sowie einem Dispergiermittel zur Stabilisierung der Suspension besteht. Normalerweise bedingt eine Erhöhung der Festigkeit solcher Hohlfasermembranen eine geringere Porosität und damit auch eine geringere Filterleistung.

Es wurde gefunden, dass die Zugabe einer Sekundärphase zu der Basisformulierung einer keramischen Hohlfaser zur Herstellung keramischer Hohlfasermembranen auf der Basis eines oxidkeramischen Materials wie Aluminiumoxid, ZrO₂ oder TiO₂, oder auf Basis eines nicht-oxidkeramischen Materials wie Si₃N₄, AIN oder WC dieser Entwicklung entgegenwirkt Die Sekundärphase besteht erfindungsgemäß aus einer Glasphase, die in einer Menge von ca. 0,5 - 10 % bezüglich des Gesamtfeststoffs zugegeben wird.

Erfindungsgemäß ist die Glasphase nanoskaliger (also in der Größenordnung von 1 bis 200 nm) Illit, ein natürlich vorkommendes dreischichtiges Schichtsilikat, mit den chemischen Hauptbestandteilen 47,0 % ± 3,5 % SiO₂, 21,0 % ± 2,0 % Al₂O₃, 7,0 % ± 1,0 % Fe₂O₃, 4,0 % ± 2,0 % CaO, 5,5 % ± 0,7 % K₂O, 3,0 % ± 0,75 % MgO, 0,15 % ± 0,05 % Na₂O, 0,8 % ± 0,1 % TiO₂, 0,3 % ± 0,08 % P₂O₅, 11,0 % ± 2,0 % GV (Gesamtverunreinigung).

Die herkömmlichen keramischen Hohlfasern auf Basis von Aluminiumoxid werden meist durch ein Nassspinnverfahren hergestellt, wobei das verwendete Dreistoffsystem aus dem Lösungsmittel, dem eingesetzten Polymer und dem Fällmittel eine Mischungslücke aufweist, wodurch das in der Spinnmasse gelöste Polymer durch den Kontakt mit dem Fällmittel erstarrt. Die Keramikpartikel werden durch diesen Vorgang in der Polymermatrix eingebettet. Nach einem Trocknungsschritt besteht der so hergestellte Grünling noch aus Polymer und Aluminiumoxid. Anschließend erfolgt ein Sinterprozess, um die keramischen Partikel durch die Ausbildung von Sinterhälsen zu verbinden und das Polymer abzubrennen, wodurch eine poröse keramische Membran hergestellt wird.

Durch das erfindungsgemäße Einbringen der Sekundärphase (Glasphase) in die Spinnmasse gelingt es, Grünlinge herzustellen, die aus Polymer, Aluminiumoxid und der Glasphase bestehen. Die durch den anschließenden Sinterprozess hergestellten Hohlfasermembranen weisen Festigkeitswerte auf, die mit etwa 13 N mehr als doppelt so hoch sind wie bei herkömmlich hergestellten Hohlfasermembranen, wobei die geometrischen Faserabmessungen (Außendurchmesser 0,8-5,0 mm, Innendurchmesser 0,5-4,8 mm), die Porenstruktur, die Gesamtporosität (40-60%) und die Reinwasserpermeabilität (10.000-30.000 l/m²/h/bar) der glasfreien Systeme beibehalten werden können. Damit gelingt es also, wesentlich höhere Festigkeitswerte (> 30%) zu erreichen, als es beispielsweise durch die Zugabe von synthetisch hergestellten Glasfritten aus gemahlenem Glaspulver möglich war.

Durch die mit dieser Erfindung erreichbare wesentliche Steigerung der mechanischen Stabilität können die Ausschussraten und damit die Kosten, die durch das Handling, die Weiterverabeitung sowie den Transport entstehen können, erheblich reduziert werden.

Derartige erfindungsgemäße Hohlfasermembranen sind vor allem zur Mikrofiltration, Nanofiltration, Ultrafiltration und Gastrennung geeignet, insbesondere für den Bereich der Wasserreinigung (Abwasserreinigung, Trinkwasseraufbereitung, etc.). Weitere Anwendungsbereiche sind Filtrationen in der Lebensmittel- und Getränkeindustrie sowie der chemischen Industrie oder der Öl- und Gasindustrie.

Eine Reduzierung der Sintertemperatur bei der Herstellung um bis zu 200°C ist möglich, wobei die mechanische Stabilität dann auf vergleichbarem Niveau zu den reinkeramischen Systemen liegt. Auf diese Weise lässt sich bei der Herstellung von Hohlfasermembranen, bei denen die mechanischen Eigenschaften, die ohne Zugabe der Glasphase erhalten werden, ausreichend sind, Energie sparen.

Wird die Glasphase im Gefüge der Hohlfasermembran während des späteren Betriebes in aggressiven (beispielsweise heiße Laugen bei pH 14) teilweise oder auch vollständig herausgelöst, bleibt die mechanische Grundfestigkeit auf dem Niveau glasfreier Systeme erhalten, d.h., die mechanische Stabilität sinkt nicht unter die Werte, die ohne Zugabe der Glasphase erhalten werden.

## Patentansprüche

1. Verfahren zur Herstellung von keramischen Hohlfasermembranen aus einer Spinnmasse, wobei dass der Spinnmasse eine Sekundärphase zugesetzt wird, wobei die Herstellung der keramischen Hohlfasermembranen auf Basis eines oxidkeramischen Materials wie Aluminiumoxid, ZrO₂ oder TiO₂ oder auf Basis eines nicht-oxidkeramischen Materials wie Si₃N₄, AIN oder WC erfolgt, wobei das Verfahren die folgenden Schritte enthält
- Herstellen einer Spinnmasse aus Lösungsmittel, Polymer und einem keramischen Pulver;
- Zugabe einer Sekundärphase zu der Spinnmasse;
- Eindüsen der Spinnmasse in ein Fällbad, wobei das Polymer durch Kontakt mit einem Fällmittel erstarrt;
- Trocknen der erstarrten Spinnmasse um einen Grünling zu erhalten und
- Sintern des erhaltenen Grünlings, **gekennzeichnet durch**, dass die Sekundärphase aus nanoskaligem Illit, in der Größenordnung von 1 bis 200 nm, besteht und wobei die Sekundärphase in einer Menge von 0,5 bis 10%, bezogen auf den Gesamtfeststoff, zugegeben wird.

2. Hohlfasermembran, hergestellt nach Anspruch 1, auf Basis eines oxidkeramischen Materials wie Aluminiumoxid, ZrO₂ oder TiO₂ oder auf Basis eines nicht-oxidkeramischen Materials wie Si₃N₄, AlN oder WC, die eine Sekundärphase aufweist, **dadurch gekennzeichnet, dass** die Sekundärphase aus nanoskaligem Illit, in der Größenordnung von 1 bis 200 nm, besteht und wobei die Sekundärphase in einer Menge von 0,5 bis 10%, bezogen auf den Gesamtfeststoff vorliegt.

3. Verwendung von Hohlfasermembranen nach Anspruch 2 zur Mikrofiltration, Ultrafiltration und/oder Gastrennung.

4. Verwendung von Hohlfasermembranen nach Anspruch 2 zur Wasseraufbereitung und/oder Abwasserbehandlung.

## Claims

1. Method for manufacturing ceramic hollow fiber membranes from a spinning material, wherein a secondary phase is added to the spinning material, wherein the manufacturing process of the ceramic hollow fiber membranes is based on an oxide-ceramic material such as aluminum oxide, ZrO₂ or TiO₂ or based on a non-oxide-ceramic material such as Si₃N₄, AIN or WC, wherein the method comprises the following steps:
- preparing a spinning material of solvent, polymer and a ceramic powder;
- adding a secondary phase to the spinning material;
- injecting the spinning material into a precipitation bath, wherein the polymer solidifies when contacting a precipitating agent;
- drying of the solidified spinning material to obtain a green body and
- sintering of the obtained green body,
**characterized in that** the secondary phase consists of nanoscale illite, in the order of 1 to 200 nm, and wherein the secondary phase is added in an amount of 0.5 to 10%, based on the total solid.

2. Hollow fiber membrane, manufactured according to claim 1, based on an oxide-ceramic material such as aluminum oxide, ZrO₂ or TiO₂ or based on a non-oxide-ceramic material such as Si₃N₄, AIN or WC, which features a secondary phase, **characterized in that** the secondary phase consists of nanoscale illite, in the order of 1 to 200 nm, and wherein the secondary phase is present in an amount of 0.5 to 10%, based on the total solid.

3. Use of hollow fiber membranes according to claim 2 for microfiltration, ultrafiltration and/or gas separation.

4. Use of hollow fiber membranes according to claim 2 for water purification and/or waste water treatment.

## Revendications

1. Procédé de fabrication de membranes céramiques en fibres creuses à partir d'une matière textile, une phase secondaire étant ajoutée à la matière textile, la fabrication de membranes céramiques en fibres creuses étant réalisée sur la base d'un matériau en céramique oxydée tel qu'oxyde d'aluminium, ZrO₂ ou TiO₂ ou sur la base d'un matériau en céramique non oxydée tel que Si₃N₄, AIN ou WC, le procédé comprenant les étapes suivantes :
- préparation d'une matière textile de solvant, de polymère et d'une poudre céramique ;
- ajout d'une phase secondaire à la matière textile ;
- injection de la matière textile dans un bain de précipitation, le polymère se solidifiant par contact avec un précipitant ;
- séchage de la matière textile solidifiée pour obtenir un compact vert et
- frittage du compact vert obtenu,
**caractérisé en ce que** la phase secondaire est constituée d'illite nanométrique, de l'ordre de 1 à 200 nm, et la phase secondaire étant ajoutée en une quantité de 0,5 à 10%, basée sur la matière solide totale.

2. Membrane céramique en fibres creuses réalisée selon la revendication 1, sur la base d'un matériau en céramique oxydée tel qu'oxyde d'aluminium, ZrO₂ ou TiO₂ ou sur la base d'un matériau en céramique non oxydée tel que Si₃N₄, AIN ou WC, qui présente une phase secondaire, **caractérisée en ce que** la phase secondaire est constituée d'illite nanométrique, de l'ordre de 1 à 200 nm, et la phase secondaire étant présente en une quantité de 0,5 à 10%, basée sur la matière solide totale.

3. Utilisation de membranes en fibres creuses selon la revendication 2 pour la microfiltration, l'ultrafiltration et/ou la séparation des gaz.

4. Utilisation de membranes en fibres creuses selon la revendication 2 pour la purification de l'eau et/ou le traitement des eaux usées.
